# EUROPÄISCHE PATENTSCHRIFT

(11) **EP 3 227 984 B1**
(45) Veröffentlichungstag und Bekanntmachung des Hinweises auf die Patenterteilung: **13.02.2019**
(21) Anmeldenummer: 15802145.1
(22) Anmeldetag: 02.12.2015
(51) Int. Cl.: H02K 1/12, H02K 5/26, H02K 7/14, H02K 11/00

(54) **ANTRIEBSEINHEIT ZUM AUS- ODER NACHRÜSTEN EINES ZWEIRADES**
DRIVE UNIT FOR FITTING OR RETROFITTING A BICYCLE
UNITÉ D'ENTRAÎNEMENT POUR ÉQUIPER OU RÉÉQUIPER UN DEUX ROUES

(30) Priorität: 03.12.2014 AT 508772014
(43) Veröffentlichungstag der Anmeldung: 11.10.2017
(73) Patentinhaber: Russwurm, Heinz Georg, 1190 Wien (AT); Kerschgens, Daniel, 1190 Wien (AT)
(72) Erfinder: KERSCHGENS, Daniel, 1190 Wien (AT); RUSSWURM, Heinz Georg, 1190 Wien (AT)
(74) Vertreter: Babeluk, Michael
(86) Internationale Anmeldenummer: PCT/EP2015/078278
(87) Internationale Veröffentlichungsnummer: WO 2016/087484

(56) Entgegenhaltungen:
- EP-A1- 0 884 237
- DE-A1-102012 205 361
- US-A- 4 641 080
- US-A1- 2007 188 037

## Beschreibung

Die Erfindung betrifft eine Antriebseinheit zum Aus- oder Nachrüsten eines Zweirades, vorzugsweise eines Fahrrades, mit einem Elektromotor, der als Scheibenmotor ausgeführt ist, mit einer Rotorscheibe samt Permanentmagneten und einem ringförmigen Stator mit Wicklungen, die ein elektrisches Wechselfeld für den Antrieb der Rotorscheibe erzeugen, wobei die Rotorscheibe drehfest mit einer Aufnahme am Vorder- oder Hinterrad des Zweirades und der ringförmige Stator an einem Rahmenteil des Zweirades befestigbar ist.

Fahrräder mit Hilfsantrieb bzw. Fahrräder die mit einer Antriebseinheit aus- oder nachgerüstet werden können, sind bereits lange Stand der Technik. Gleiches gilt für andere motorisierte Zweiräder, beispielsweise Skooter, E-Bikes oder E-Roller, die mit einem Elektromotor ausgerüstet sein können. Bei den Fahrrädern wird vor allem zwischen Fahrrädern mit limitierter Tretunterstützung und Fahrrädern mit tretunabhängigem Zusatzantrieb unterschieden.

Aus der DE 101 27 769 A1 ist beispielsweise ein Fahrrad mit einem elektrischen Hilfsantrieb bekannt, bei dem die Abtriebswelle des Elektromotors über ein Planetenradgetriebe mit der Nabe des Hinterrades des Fahrrades koppelbar ist. Das Planetenradgetriebe umfasst drei Schaltstufen. Der Elektromotor ist als Hohlwellenmotor ausgebildet und mit seiner Mittelachse koaxial zur Mittelachse des Hinterrades angeordnet.

Aus der DE 10 2010 026 405 A1 ist ein Fahrrad mit einem elektrischen Hilfsantrieb bekannt. Der Hilfsantrieb umfasst einen am Rahmen montierten Elektromotor, dessen Abtriebswelle sich in Fahrradlängsrichtung erstreckt und über ein Winkelgetriebe antriebswirksam mit dem Hinterrad verbunden ist. Der Hilfsantrieb wird als Nachrüstsatz angeboten, um ein herkömmliches Fahrrad mit einem elektrischen Antrieb auszustatten. Der Elektromotor ist vorzugsweise als Rohrmotor ausgeführt und kann mit einer Rohrschelle an der Kettenstrebe des Hinterrades befestigt werden.

Aus der DE 10 2012 205 361 A1, welche die Präambel des Anspruchs 1 offenbart, ist eine bürstenlose, elektrische Maschine in Form eines Scheibenmotors bekannt, wobei im Rotor des Motors Permanentmagnete angeordnet sind, die in den Polschuhen des Rotors magnetische Pole ausbilden. Der Rotor wird durch ein Wechselfeld antrieben, das in den Wicklungen erzeugt wird, die an einem äußeren, ringförmigen Stator angeordnet sind.

Aus der WO 2008/056973 A1 ist ein elektrischer Scheibenmotor zur Ausrüstung eines Fahrrades bekannt, wobei die Antriebseinheit am Vorderrad oder am Hinterrad des Fahrrades montiert werden kann. Der Scheibenmotor weist eine Rotoreinheit samt Permanentmagneten auf, die mit einem inneren Flansch an der Radnabe befestigt ist. In einer im Querschnitt U-förmigen, umlaufenden Aufnahme der Rotoreinheit ist die Statoreinheit samt den Wicklungen des Scheibenmotors gelagert, wobei zur Drehmomentübertragung auf den Rahmen des Fahrrads ein an der Statoreinheit befestigter Hebel vorgesehen ist, der am Bremssattel befestigt werden kann. An einem äußeren Flansch der Rotoreinheit können die nach dem Einbau der Antriebseinheit verkürzten Speichen des Vorder- oder Hinterrades befestigt werden.

Ähnliche, als Scheibenmotor ausgebildete Antriebseinheiten zur Ausrüstung von Fahrrädern sind aus der US 2011/0198144 A1 und der US 2009/0082914 A1 bekannt.

Aus der US 4,641,080 A ist ein Permanentmagnet-Generator in Form eines Scheibenmotors bekannt, welcher eine Fehlerdetektionseinrichtung aufweist. Der Stator des Scheibenmotors ist geteilt ausgeführt, wobei über eine motorbetriebene Spindel der Spalt zwischen dem Rotor und dem Stator vergrößert werden kann, falls ein Fehlverhalten des Motors detektiert wird. Durch das Vergrößern des Spaltes wir der Magnetfluss reduziert und eine Überhitzung der Motorwindungen verhindert.

Aufgabe der Erfindung ist es ausgehend vom oben dargelegten Stand der Technik eine Antriebseinheit für ein Zweirad, vorzugsweise für ein Fahrrad, derart weiterzubilden, dass auf einfache Weise eine Erstausrüstung bzw. Nachrüstung des Zweirades mit der Antriebseinheit durchgeführt werden kann und auch eine einfache und rasche Demontage wesentlicher Teile der Antriebseinheit möglich ist.

Diese Aufgabe wird erfindungsgemäß dadurch gelöst, dass der ringförmige Stator in Umfangsrichtung aufklappbar und von der Rotorscheibe abnehmbar bzw. abziehbar ausgeführt ist, wobei der ringförmige Stator eine handbetätigbare Fixiereinrichtung aufweist, mit welcher der Stator werkzeuglos in seiner Betriebsstellung fixierbar ist.

Elektrische Fahrräder bzw. Fahrräder mit Hilfsantrieb sind leider oft durch Diebstahl und Vandalismus gefährdet. Mit der vorliegenden Erfindung ist es nun erstmals möglich wesentliche Teile der Antriebseinheit, nämlich den ringförmigen Stator, mit wenigen Handgriffen und ohne Verwendung von Werkzeugen vom Fahrrad abzunehmen und sicher zu verwahren.

Besonders vorteilhaft ist es, wenn beim Einbau der Antriebseinheit bereits vorhandene Strukturen des Fahrrades für die Befestigung der einzelnen Komponenten der Antriebseinheit verwendet werden können. So wird die Rotorscheibe drehfest an der bereits vorhandenen Aufnahme für eine Bremsscheibe an der Radnabe des Vorder- oder Hinterrades des Zweirades fixiert. Dazu muss lediglich das jeweilige Rad ausgebaut, eine allfällige Bremsscheibe entfernt und die Rotorscheibe des Scheibenmotors am Lochkranz der Bremsscheibe befestigt werden. Weiters weist die Antriebseinheit erfindungsgemäß Befestigungsmittel, vorzugsweise einen Adapter, eine Justierplatte und ein Führungselement auf, mit welchen der ringförmige Stator an der bereits vorhandenen Aufnahme für einen Bremssattel an der Vorderradgabel oder der Hinterradgabel (bzw. der Hinterradstrebe) befestigt wird.

Gemäß einer weiteren, vorteilhaften Ausführungsvariante ist am äußeren Umfang des ringförmigen Stators, vorzugsweise im Bereich der aufklappbaren Abschnitte, ein aufladbarer Energiespeicher, vorzugsweise ein Lithium-Ionen-Akku, angeordnet, welcher gemeinsam mit dem ringförmigen Stator vom Rotor abgenommen und zum Aufladen, beispielsweise in die Wohnung oder Arbeitsstätte, mitgenommen werden kann.

Die Erfindung wird im Folgenden anhand der dargestellten Ausführungsvarianten näher erläutert. Es zeigen:
- Fig. 1: einen Scheibenmotor der erfindungsgemäßen Antriebseinheit in einer Frontansicht;
- Fig. 2: den Scheibenmotor gemäß Fig. 1 in einer dreidimensionalen Darstellung;
- Fig. 3: eine Einbaustelle für den erfindungsgemäßen Scheibenmotor an der Vorderradgabel eines Fahrrades;
- Fig. 4: die einzelnen Teile der erfindungsgemäßen Antriebseinheit in einer Explosionsdarstellung;
- Fig. 5: eine Ausführungsvariante des Scheibenmotors gemäß Fig. 1 mit einem aufladbaren Energiespeicher;
- Fig. 6: eine Detaildarstellung einer Verriegelungseinrichtung des aufklappbaren Stators;
- Fig. 7: den Scheibenmotor der erfindungsgemäßen Antriebseinheit gemäß Fig. 5 in einer Einbausituation am Vorderrad eines Fahrrades; sowie
- Fig. 8: ein Fahrrad mit der erfindungsgemäßen Antriebseinheit am Vorderrad und am Hinterrad.

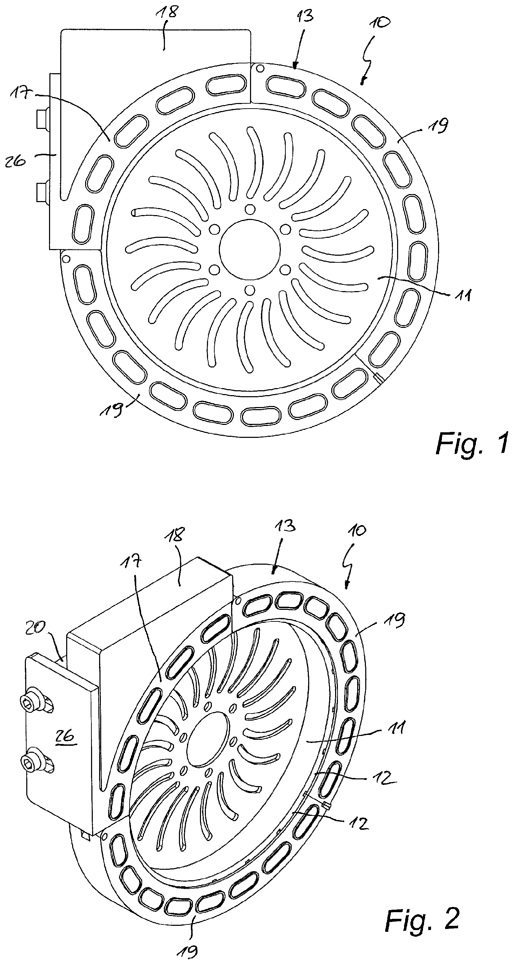

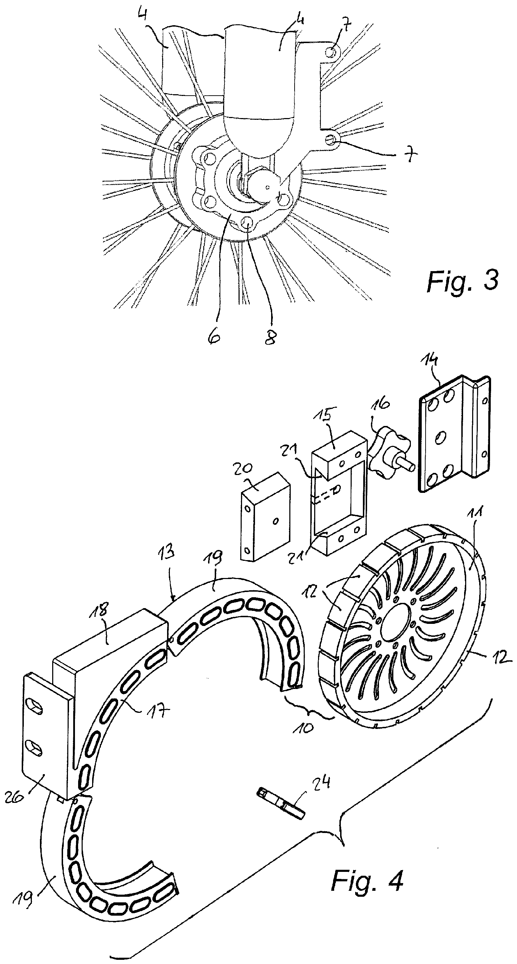

Die in den Fig. 1 bis Fig. 4 dargestellte, erste Variante einer Antriebseinheit zum Aus- oder Nachrüsten eines Zweirades besteht im Wesentlichen aus dem Scheibenmotor 10 und diversen Adapter- und Befestigungsmitteln, die näher in Fig. 4 dargestellt sind.

Der Scheibenmotor 10 weist eine Rotorscheibe 11 mit Permanentmagneten 12 auf, die unter Ausbildung eines Luftspaltes von einem im Wesentlichen ringförmigen Stator 13 samt Wicklungen umgeben sind, die in herkömmlicher Weise ein elektrisches Wechselfeld für den Antrieb der Rotorscheibe 11 erzeugen.

Da bereits viele Fahrräder mit Bremsscheiben angeboten werden, ist beispielsweise an der Nabe des Vorderrades (siehe Fig. 3) eine Aufnahme 6 für die Bremsscheibe vorgesehen, deren Lochkranz 8 für die Anbringung der Rotorscheibe 11 des Scheibenmotors 10 geeignet ist. Bei einer Nachrüstung muss somit lediglich das Vorderrad ausgebaut und die Bremsscheibe entfernt werden, wonach die Rotorscheibe 11 mit den für die Bremsscheibe vorgesehenen Schrauben am Lochkranz 8 befestigt werden kann. Die Bremsfunktion kann zumindest teilweise durch den auch als Motorbremse wirkenden Scheibenmotor 10 sowie - falls erforderlich - durch eine Felgenbremse ersetzt werden.

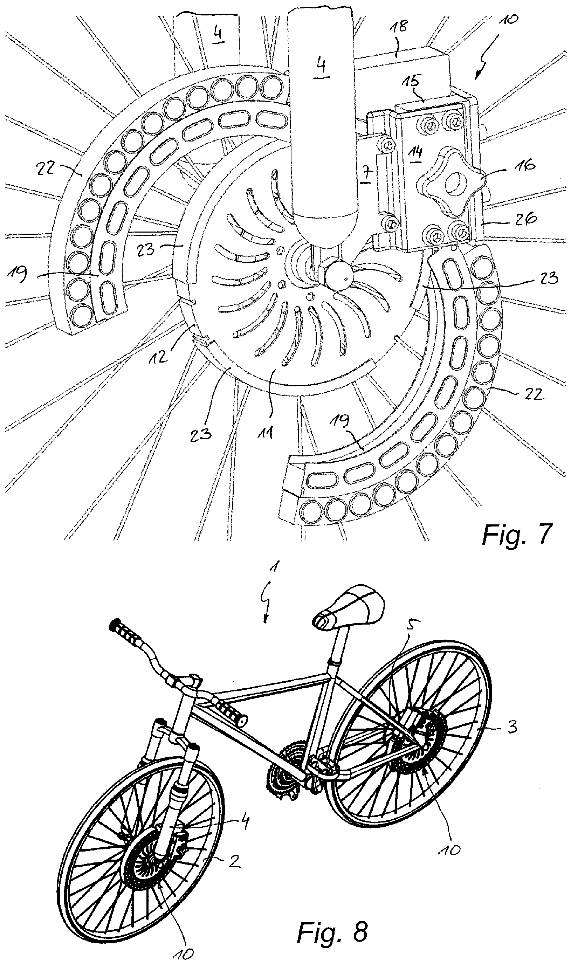

Wie in Fig. 4 im Detail dargestellt, weist die Antriebseinheit Befestigungsmittel, beispielsweise einen Adapter 14, eine Justierplatte 15 und ein Führungselement 20 auf, mit welchen der ringförmige Stator 13 an der Aufnahme 7 für einen Bremssattel an der Vorderradgabel 4 befestigt werden Kann. Bei der Aufnahme 7 für den Bremssattel hat sich eine einheitliche Bemaßung durchgesetzt, die beispielsweise unter dem Standard IS2000 bekannt ist. Eine derartige Aufnahme 7 für den Bremssattel befindet sich auch an der Hinterradgabel bzw. der Hinterradstrebe 5 (siehe Fig. 8), so dass die Anbringung des Scheibenmotors 10 auch an dieser Position ohne Umbauarbeiten möglich ist.

Um den ringförmigen Stator 13 in der Ebene des Scheibenmotors 10 von der fix montierten Rotorscheibe 11 abziehen zu können, ohne das Vorderrad auszubauen, ist der Stator 13 in Umfangsrichtung aufklappbar ausgeführt, wobei eine handbetätigbare Fixiereinrichtung in Form eines Handrades 16 vorgesehen ist, welche bei der Montage die Justierplatte 15 von außen durchsetzt und das am Stator 13 befestigte Führungselement 20 an die Justierplatte 15 anpresst.

Das Handrad 16 kann gemäß einer Variante auch als Klemmhebel oder Exzenterhebel ausgeführt sein (nicht dargestellt), der nur gelockert werden muss und im Führungselement 20 verbleiben kann. Dazu muss lediglich die durchgehende Bohrung in der Justierplatte 15 als bis an den Rand führendes Langloch (strichliert dargestellt) ausgeführt sein.

Der ringförmige Stator 13 ist in Fig. 4 in seiner aufgeklappten Stellung dargestellt, und zeigt einen Basisabschnitt 17, an welchem ein Gehäuse 18 zur Aufnahme einer Motorsteuereinheit ausgebildet ist, wobei am Basisabschnitt 17 die zwei aufklappbaren Abschnitte 19 des Stators 13 angelenkt sind.

Das Führungselement 20, das an einer Anschlagplatte 26 des Basisabschnittes 17 befestigt ist, ist in Führungsstrukturen 21 an der Justierplatte 15, beispielsweise in der Art einer Schwalbenschwanz-Verbindung, einschiebbar und wird dann mit dem Handrad 16 in der Betriebstellung fixiert.

Um nun den Scheibenmotor 10 der erfindungsgemäßen Antriebseinheit erstmalig in ein vorhandenes Fahrrad einzubauen, muss das Vorderrad (gleiches gilt für das Hinterrad) abgenommen werden. Dann wird die ggf. vorhanden Bremsscheibe durch die Rotorscheibe 11 der Antriebseinheit ersetzt. Weiters wird der ggf. vorhandene Bremssattel entfernt und an dessen Stelle der Adapter 14 an der Aufnahme 7 für den Bremssattel festgeschraubt. Auf den Adapter 14 wird danach die Justierplatte 15 zunächst locker aufgeschraubt, um noch Justierungen in vertikaler und horizontaler Richtung vornehmen zu können. Nun wird der ringförmige Stator 13 aufgeklappt und über die Rotorscheibe 11 geschoben, wobei darauf zu achten ist, dass das Führungselement 20, welches in die Führungsstrukturen 21 der Justierplatte 15 eingeschoben werden muss, in die Schwalbenschwanz-Verbindung einrastet.

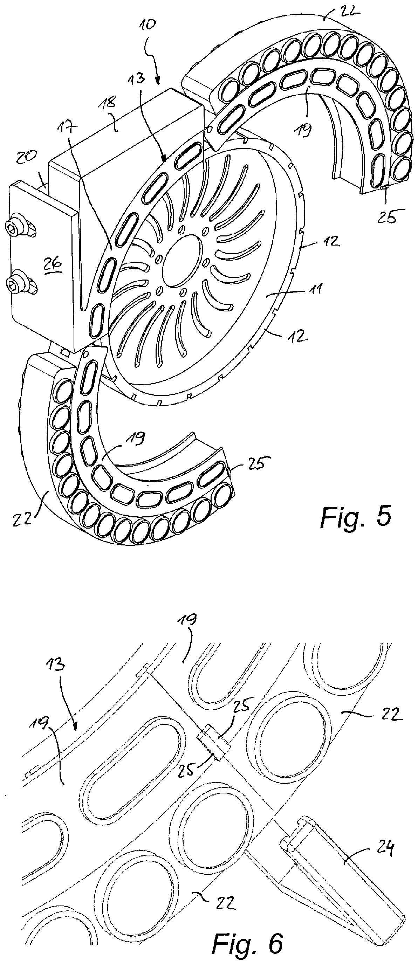

Für die nur einmal durchzuführende Justierung weist die Antriebseinheit Justiereinlagen 23 auf (siehe Fig. 7), die bei der Erstinstallation zur Festlegung eines radialen Luftspaltes zwischen der Rotorscheibe 11 und dem ringförmigen Stator 13 auf die Rotorscheibe 11 aufgeklipst werden. Danach werden die aufklappbaren Abschnitte 19 des Stators 13 zusammengeklappt und mit Hilfe der an den aufklappbaren Abschnitten 19 angeordneten Rastelemente 25 und dem aufschiebbaren, U-förmigen Verriegelungselement 24 (siehe Fig. 6) aneinander fixiert.

Nun werden alle Schrauben an der Justierplatte 15 und der Anschlagplatte 26 festgezogen. Danach wird der Stator aufgeklappt, die Justiereinlagen 23 entfernt und die aufklappbaren Abschnitte 19 mit dem per Hand aufschiebbaren Verriegelungselement 24 in Betriebsstellung fixiert.

Weiters ist es möglich, auch das Verriegelungselement 24 durch einen in Umfangsrichtung wirkenden Spann- oder Klemmhebel zu ersetzen, der am ringförmigen Stator 13 verbleibt und auf einfache Weise händisch gelöst und verriegelt werden kann.

Um den ringförmigen Stator 13 später abzunehmen muss dieser nur noch aufgeklappt und aus der Schwalbenschwanz-Verbindung abgezogen werden. Eine neuerliche Justierung beim Wiedereinsatz ist dann nicht mehr notwendig.

Die in den Fig. 5, Fig. 6 und Fig. 7 dargestellte Ausführungsvariante weist am äußeren Umfang des ringförmigen Stators 13, vorzugsweise im Bereich der aufklappbaren Abschnitte 19, einen aufladbaren Energiespeicher 22, beispielsweise einen Lithium-Ionen-Akku, auf.

Über die Gelenke zwischen dem Basisabschnitt 13 und den aufklappbaren Abschnitten 19 geführte, flexible elektrische Verbindungskabel sind nicht dargestellt.

Vorteilhafterweise kann bei dieser Ausführungsvariante mit dem ringförmigen Stator 13 gleichzeitig der aufladbare Energiespeicher 22 vom Fahrrad abgenommen werden und ist so vor Beschädigung und Diebstahl geschützt. Weiters müssen keine Verkabelungen zwischen dem Scheibenmotor 10 und dem Energiespeicher am Fahrrad verlegt werden, da diese bereits in der kompakten Einheit integriert sind.

Die im Gehäuse 18 angeordnete Motorsteuerung kann drahtlos, beispielsweise über mobile Kommunikationsmittel und/oder über Drehmomentsensoren in den Pedalen des Fahrrades und drahtloser Signalübertragung erfolgen.

Erfindungsgemäß kann der Scheibenmotor 10 auch als Motorbremse und Einheit zur Energierückgewinnung eingesetzt werden. Eine entsprechende Steuerung kann drahtlos über einen Sensor im Bremshebel samt drahtloser Signalübertragung erfolgen.

Der Scheibenmotor 10 kann bevorzugt als bürstenlose Synchronmaschine ausgeführt sein.

## Patentansprüche

1. Antriebseinheit zum Aus- oder Nachrüsten eines Zweirades (1), vorzugsweise eines Fahrrades, mit einem Elektromotor, der als Scheibenmotor (10) ausgeführt ist, mit einer Rotorscheibe (11) samt Permanentmagneten (12) und einem ringförmigen Stator (13) mit Wicklungen, die ein elektrisches Wechselfeld für den Antrieb der Rotorscheibe (11) erzeugen, wobei die Rotorscheibe (11) drehfest mit einer Aufnahme (6) am Vorder- oder Hinterrad des Zweirades (1) und der ringförmige Stator (13) an einem Rahmenteil (4, 5) des Zweirades (1) befestigbar ist, **dadurch gekennzeichnet, dass** der ringförmige Stator (13) in Umfangsrichtung aufklappbar und von der Rotorscheibe (11) abnehmbar bzw. abziehbar ausgeführt ist, wobei der ringförmige Stator (13) eine handbetätigbare Fixiereinrichtung aufweist, mit welcher der ringförmige Stator (13) werkzeuglos in seiner Betriebsstellung am Rahmenteil (4, 5) fixierbar ist

2. Antriebseinheit nach Anspruch 1, **dadurch gekennzeichnet, dass** die Rotorscheibe (11) drehfest mit der Aufnahme (6) für eine Bremsscheibe an der Radnabe des Vorder- oder Hinterrades (2, 3) des Zweirades (1) verbindbar ist.

3. Antriebseinheit nach Anspruch 1 oder 2, **dadurch gekennzeichnet, dass** die Antriebseinheit Befestigungsmittel, vorzugsweise einen Adapter (14), eine Justierplatte (15) und ein Führungselement (20) aufweist, mit welchen der ringförmige Stator (13) an einer Aufnahme (7) für einen Bremssattel an der Vorderradgabel (4) oder der Hinterradgabel bzw. der Hinterradstrebe (5) befestigbar ist.

4. Antriebseinheit nach einem der Ansprüche 1 bis 3, **dadurch gekennzeichnet, dass** der ringförmige Stator (13) einen Basisabschnitt (17) aufweist, an welchem ein Gehäuse (18) zur Aufnahme einer Motorsteuereinheit ausgebildet ist, wobei am Basisabschnitt (17) zumindest ein, vorzugsweise zwei aufklappbare Abschnitte (19) des Stators (13) angelenkt sind.

5. Antriebseinheit nach Anspruch 4, **dadurch gekennzeichnet, dass** ein Befestigungsmittel, nämlich das Führungselement (20), am Basisabschnitt (17) des ringförmigen Stators (13) angeformt oder befestigt ist, welches in Führungsstrukturen (21) an einem weiteren Befestigungsmittel, nämlich der Justierplatte (15), vorzugsweise in der Art einer Schwalbenschwanz-Verbindung, einschiebbar und mittels eines Handrades (16) fixierbar ist.

6. Antriebseinheit nach Anspruch 4 oder 5, **dadurch gekennzeichnet, dass** an den Enden der aufklappbaren Abschnitte (19) des ringförmigen Stators (13) Rastelemente (25) angeordnet sind, auf welche in Schließstellung des ringförmigen Stators (13) ein im Wesentlichen U-förmiges Verriegelungselement (24) aufschiebbar ist.

7. Antriebseinheit nach einem der Ansprüche 1 bis 6, **dadurch gekennzeichnet, dass** am äußeren Umfang des ringförmigen Stators (13), vorzugsweise im Bereich der aufklappbaren Abschnitte (19), ein aufladbarer Energiespeicher (22), vorzugsweise ein Lithium-Ionen-Akku, angeordnet ist.

8. Antriebseinheit nach einem der Ansprüche 1 bis 7, **dadurch gekennzeichnet, dass** die Antriebseinheit Justiereinlagen (23) umfasst, die bei der Erstinstallation zur Festlegung eines radialen Luftspaltes zwischen der Rotorscheibe (11) und dem ringförmigen Stator (13) auf die Rotorscheibe (11) aufklipsbar ausgeführt sind.

9. Antriebseinheit nach einem der Ansprüche 1 bis 8, **dadurch gekennzeichnet, dass** der Scheibenmotor (10) als Motorbremse und Einheit zur Energierückgewinnung einsetzbar ist.

10. Antriebseinheit nach einem der Ansprüche 1 bis 9, **dadurch gekennzeichnet, dass** der Scheibenmotor (10) als bürstenlose Synchronmaschine ausgeführt ist.

## Claims

1. Drive unit for equipping or retrofitting a two-wheeler (1), preferably a bicycle, having an electric motor which is designed as a disc motor (10), a rotor disc (11) together with permanent magnets (12) and an annular stator (13) with windings which generate an alternating electric field for driving the rotor disc (11), wherein the rotor disc (11) can be fastened in rotationally fixed manner with a receptacle (6) to the front or rear wheel of the two-wheeler (1) and the annular stator (13) can be fastened to a frame part (4, 5) of the two-wheeler (1), **characterised in that** the annular stator (13) can be folded open in the circumferential direction and is formed to be removable or withdrawable from the rotor disc (11), wherein the annular stator (13) has a manually operable fixing device with which the annular stator (13) can be fixed to the frame part (4, 5) without tools in its operating position.

2. Drive unit according to claim 1, **characterised in that** the rotor disc (11) can be connected in a rotationally fixed manner to the receptacle (6) for a brake disc on the wheel hub of the front or rear wheel (2, 3) of the two-wheeler (1).

3. Drive unit according to claim 1 or 2, **characterised in that** the drive unit has fastening means, preferably an adapter (14), an adjusting plate (15) and a guide element (20), by means of which the annular stator (13) can be fastened to a receptacle (7) for a brake caliper on the front wheel fork (4) or the rear wheel fork or the rear wheel strut (5).

4. Drive unit according to one of claims 1 to 3, **characterised in that** the annular stator (13) has a base section (17) on which a housing (18) for accommodating a motor control unit is formed, wherein at least one, preferably two hinged sections (19) of the stator (13) are articulated to the base section (17).

5. Drive unit according to claim 4, **characterised in that** a fastening means, namely the guide element (20), is integrally formed on or fastened to the base section (17) of the annular stator (13), which can be inserted into guide structures (21) on a further fastening means, namely the adjusting plate (15), preferably in the manner of a dovetail connection, and can be fixed by means of a handwheel (16).

6. Drive unit according to claim 4 or 5, **characterised in that** detent elements (25) are arranged at the ends of the hinged sections (19) of the annular stator (13), onto which detent elements (25) a substantially U-shaped locking element (24) can be pushed in the closed position of the annular stator (13).

7. Drive unit according to one of claims 1 to 6, **characterised in that** a rechargeable energy storage unit (22), preferably a lithium-ion battery, is arranged on the outer circumference of the annular stator (13), preferably in the region of the hinged sections (19).

8. Drive unit according to one of claims 1 to 7, **characterised in that** the drive unit comprises adjusting inserts (23) which are designed to be clippable onto the rotor disc (11) during the initial installation in order to define a radial air gap between the rotor disc (11) and the annular stator (13).

9. Drive unit according to one of claims 1 to 8, **characterised in that** the disc motor (10) can be used as a motor brake and unit for energy recovery.

10. Drive unit according to one of claims 1 to 9, **characterised in that** the disc motor (10) is designed as a brushless synchronous machine.

## Revendications

1. Unité d'entraînement destinée à équiper ou à rééquiper un deux roues (1), de préférence une bicyclette, comportant un moteur électrique qui est réalisé sous la forme d'un moteur à disque (10), comprenant un disque de rotor (11) avec des aimants permanents (12) ainsi qu'un stator annulaire (13) équipé d'enroulements qui produisent un champ électrique alternatif entraînant le disque de rotor (11), le disque de rotor (11) pouvant être fixé solidairement en rotation avec un organe de réception (6) sur la roue avant ou la roue arrière du deux roues (1) et le stator annulaire (13) pouvant être fixé sur une partie de cadre (4, 5) du deux roues (1),
**caractérisée en ce que**
le stator annulaire (13) est réalisé de façon à pouvoir être rabattu en direction périphérique et enlevé ou extrait du disque de rotor (11), le stator annulaire (13) comportant un dispositif de fixation actionnable manuellement avec lequel il peut être fixé sans outil dans sa position de fonctionnement sur la partie de cadre (4, 5).

2. Unité d'entraînement conforme à la revendication 1,
**caractérisée en ce que**
le disque de rotor (11) peut être relié solidairement en rotation à l'organe de réception (6) d'un disque de frein sur le moyeu de la roue avant ou de la roue arrière (2, 3) du deux roues (1).

3. Unité d'entraînement conforme à la revendication 1 ou 2,
**caractérisée en ce qu'**
elle comporte des moyens de fixation, de préférence un adaptateur (14), une plaque de réglage (15) et un élément de guidage (20) permettant de fixer le stator annulaire (13) à un organe de réception (7) d'un étrier de frein sur la fourche de la roue avant (4) ou la fourche de la roue arrière ou le hauban (5) de la roue arrière.

4. Unité d'entraînement conforme à l'une des revendications 1 à 3,
**caractérisée en ce que**
le stator annulaire (13) comporte un segment de base (17) sur lequel est formé un boîtier (18) de réception d'une unité de commande motorisée, sur le segment de base (17) étant articulé(s) au moins un et de préférence deux segments rabattables (19) du stator (13).

5. Unité d'entraînement conforme à la revendication 4,
**caractérisée en ce que**
sur le segment de base (17) du stator annulaire (13) est formé ou fixé un moyen de fixation, à savoir l'élément de guidage (20) qui peut être glissé dans des structures de guidage (21) sur un autre moyen de fixation, à savoir la plaque de réglage (15) de préférence à la manière d'une liaison à queue d'aronde, et fixé au moyen d'une roue à main (16).

6. Unité d'entraînement conforme à la revendication 4 ou 5,
**caractérisée en ce que**
sur les extrémités des segments rabattables (19) du stator annulaire (13) sont montés des éléments d'enclipsage (25) sur lesquels peut être glissé dans la position de fermeture du stator annulaire (13) un élément de verrouillage (24) essentiellement en forme de U.

7. Unité d'entraînement conforme à l'une des revendications 1 à 6,
**caractérisée en ce que**
sur la périphérie externe du stator annulaire (13), de préférence dans la zone du segment rabattable (19) est monté un accumulateur d'énergie (22) rechargeable, de préférence un accumulateur lithium-ion.

8. Unité d'entraînement conforme à l'une des revendications 1 à 7,
**caractérisée en ce qu'**
elle comporte des inserts de réglage (23) qui, lors de la première installation, peuvent être clipsés sur le disque de rotor (11) pour permettre d'obtenir un intervalle d'air radial entre le disque de rotor (11) et le stator annulaire (13).

9. Unité d'entraînement conforme à l'une des revendications 1 à 8,
**caractérisée en ce que**
le moteur à disque (10) peut être monté sous la forme d'un frein moteur et d'une unité de récupération d'énergie.

10. Unité d'entraînement conforme à l'une des revendications 1 à 9,
**caractérisée en ce que**
le moteur à disque (10) est réalisé sous la forme d'un moteur synchrone sans balais.
